Europäisches Patentamt

**European Patent Office**

**Office européen des brevets**

(19)

(11) Numéro de publication : **0 068 912 B1**

(12) **FASCICULE DE BREVET EUROPÉEN**

(45) Date de publication du fascicule du brevet :
03.04.85

(51) Int. Cl.⁴ : **C 08 F 8/00, C 08 F 297/02**

(21) Numéro de dépôt : **82400888.2**

(22) Date de dépôt : **14.05.82**

(54) **Résines d'hydrocarbures aromatiques contenant des groupes propénoyles et leur application à l'obtention de polymères par voie anionique.**

(30) Priorité : **26.05.81 FR 8110433**

(43) Date de publication de la demande :
**05.01.83 Bulletin 83/01**

(45) Mention de la délivrance du brevet :
**03.04.85 Bulletin 85/14**

(84) Etats contractants désignés :
**AT BE CH DE FR GB IT LI LU NL SE**

(56) Documents cités :
**FR-A- 2 344 572**
**US-A- 2 566 302**
**US-A- 3 223 679**

(73) Titulaire : **Société Chimique des Charbonnages S.A.**
**Tour Aurore Place des Reflets**
**F-92080 Paris La Défense Cédex 5 (FR)**

(72) Inventeur : **Mehalla, Hacène**
**23, rue Sleidan**
**F-67000 Strasbourg (FR)**

(74) Mandataire : **Fourquet, Antoinette et al**
**CdF Chimie S.A. Service Propriété Industrielle Tour**
**Aurore Place des Reflets Cedex 5**
**F-92080 Paris la Défense 2 (FR)**

Jouve, 18, rue St-Denis, 75001 Paris, France

**Description**

La présente invention concerne des résines d'hydrocarbures aromatiques contenant des groupes propénoyles éventuellement substitués et leur application à l'obtention de polymères par voie anionique.

Il est connu, par exemple par les brevets américains n° 2.566.302 et 3.223.679 d'augmenter le taux d'insaturation de résines de polystyrène dont la masse moléculaire est de préférence non inférieure à 3 000, par exemple de l'ordre de 40 000 à 50 000, en faisant réagir un chlorure d'acide insaturé sur du polystyrène en présence d'un acide de Lewis.

On a maintenant trouvé qu'il est possible d'augmenter le taux d'insaturation de résines d'hydrocarbures aromatiques contenant une proportion non négligeable de motifs dérivés de l'indène et/ou de ses homologues supérieurs et ayant des points de ramollissement relativement élevés, de l'ordre par exemple de 90° à 140 °C.

Un premier objet de la présente invention concerne une résine d'hydrocarbures aromatiques, contenant notamment des motifs dérivés du styrène et/ou de ses homologues supérieurs, modifiée par des groupes propénoyles éventuellement substitués et introduits par réaction d'acylation sur les noyaux aromatiques de ladite résine, lesdits groupes propénoyles ayant pour formule générale RR'C=CR''—CO— dans laquelle les radicaux R, R' et R'' identiques ou différents, sont choisis parmi l'hydrogène, les groupes méthyle éthyle, n-propyle, isopropyle et les atomes d'halogène, caractérisée en ce qu'elle contient de 10 à 90 % en moles et de préférence de 30 à 60 % en moles de motifs dérivés de l'indène et/ou de ses homologues supérieurs, en ce qu'elle contient de 0,02 à 0,07 groupe propénoyle éventuellement substitué et introduit sur le noyau aromatique et en ce que la masse moléculaire moyenne de la résine d'hydrocarbures aromatiques utilisée comme produit de départ est comprise entre 500 et 2 500.

La résine d'hydrocarbures aromatiques selon l'invention est obtenue en traitant par un chlorure d'acide insaturé une résine d'hydrocarbures aromatiques, utilisée comme produit de départ, obtenue par exemple par polymérisation cationique de mélanges d'hydrocarbures aromatiques provenant avantageusement, du craquage à la vapeur de naphta. Lesdits mélanges d'hydrocarbures aromatiques contiennent généralement du styrène, de l'α-méthylstyrène, des vinyltoluènes, de l'indène et des méthylindènes. Avantageusement un tel mélange contient de 10 à 90 % et de préférence de 30 à 60 % en moles de la somme indène + méthylindènes. Ils peuvent contenir également du toluène en faible quantité, des xylènes et de l'éthylbenzène. La polymérisation de ces mélanges a lieu en présence d'acide de Lewis et de préférence selon un procédé continu comme décrit dans le brevet français n° 2.344.572. La résine d'hydrocarbures aromatiques utilisée comme produit de départ a une masse moléculaire moyenne comprise entre 500 et 2 500 et un point de ramollissement Kraemer-Sarnow compris entre 50 et 150 °C. Le chlorure d'acide insaturé mis en réaction avec cette résine d'hydrocarbures aromatiques a pour formule générale RR'C=CR''—COCl dans laquelle R, R' et R'', identiques ou différents, sont choisis parmi l'hydrogène, les groupes méthyle, éthyle, n-propyle, isopropyle et les atomes d'halogène. On peut ainsi utiliser les chlorures des acides acrylique, méthacrylique, crotonique, iso-crotonique, 2-chloro-acrylique, 3-chloro-acrylique, tiglique, angélique, 2-penténoïque, 2-hexénoïque, 2,3-dichloroacrylique.

La résine d'hydrocarbures aromatiques est dissoute, avant réaction, dans un solvant inerte tel que le chlorure de méthylène.

La réaction entre le chlorure d'acide et la résine d'hydrocarbures aromatiques conduit à la fixation du radical RR'C=CR''—CO— sur les noyaux aromatiques de ladite résine. Le taux de fixation dépend du rapport entre le nombre de moles de chlorure d'acide utilisé et le nombre de noyaux aromatiques contenus dans la quantité de résine mise à réagir. On préfère utiliser un rapport tel qu'il conduise à la formation d'une résine modifiée contenant de 0,02 à 0,07 groupe propénoyle RR'C=CR''—CO— par noyau aromatique. Les résines contenant une plus grande proportion de groupes propénoyle sont difficiles à obtenir étant donné leur tendance à former un gel.

Les résines d'hydrocarbures aromatiques selon l'invention trouvent une application dans leur transformation en polymères à très haut poids moléculaire.

Un second objet de l'invention concerne un polymère d'une résine d'hydrocarbures aromatiques contenant des groupes propénoyle caractérisé en ce qu'il est obtenu par voie anionique et en ce que sa masse moléculaire en poids s'étend de $10^4$ à $2 \cdot 10^7$.

La polymérisation de la résine d'hydrocarbures aromatiques contenant des groupes propénoyle a lieu dans un solvant (généralement un éther tel que le tétrahydrofuranne) en présence d'un catalyseur anionique tel qu'un alkyllithium ou un alkylsodium. Afin d'éviter une réticulation la réaction est généralement commencée à basse température et poursuivie à température ambiante.

Il est possible de copolymériser la résine d'hydrocarbures aromatiques modifiée avec un polymère vivant tel que le polystyrène ⊖, le polyméthacrylate de méthyle ⊖, obtenu par voie anionique, le contre-ion étant le lithium ou le sodium. Cette copolymérisation a lieu à basse température et dans un solvant éthéré.

Les exemples suivants ont pour but d'illustrer l'invention.

Exemples 1 à 5

Préparation de la résine d'hydrocarbures aromatiques contenant des groupes propénoyle

2

Dans un réacteur muni de moyens de chauffage et refroidissement régulés et de moyens d'agitation on introduit 500 ml (exemples 1 et 3 à 5) ou 750 ml (exemple 2) de chlorure de méthylène et 50 g d'une résine d'hydrocarbures insaturés contenant les motifs dérivés des hydrocarbures suivants, en % en moles :

Styrène :　　　　10 %　Vinyl toluènes : 35 %　　　　Indène : 34 %
α-méthylstyrène : 3 %　　　　　　　　　　méthylindène : 18 %,

ayant une masse moléculaire moyenne en nombre de 1 700, un point de ramollissement Kraemer-Sarnow (Norme NFT 67001) de 140 °C et un indice d'iode de 39 (Norme ASTM D 1959-69).

Dans la solution obtenue on introduit progressivement à température ambiante les quantités (mentionnées au tableau I) de chlorure d'acide acrylique (exemples 1 à 3) ou méthacrylique (exemples 4 et 5). Sous vive agitation on introduit ensuite dans le mélange réactionnel, à température ambiante et très progressivement les quantités indiquées au tableau I de chlorure d'aluminium anhydre pulvérulent. Après 30 minutes de réaction le mélange réactionnel, de coloration rouge foncé, est versé dans un mélange de glace et d'acide chlorhydrique sous vive agitation. La décoloration est complète. On distille le chlorure de méthylène à température ambiante sous pression réduite. La résine contenant des groupes propénoyle est précipitée. On la filtre, la broie, la lave une seconde fois avec de l'eau acidulée, la filtre à nouveau et la sèche. On peut purifier la résine obtenue en la dissolvant dans du benzène ou du toluène, en filtrant la solution et distillant le solvant sous pression réduite. Sur cette résine purifiée on détermine la masse moléculaire moyenne en nombre et le nombre de groupes propénoyle fixé, en moyenne, par noyau aromatique. Cette dernière détermination est effectuée par polarographie. Les valeurs trouvées figurent au tableau I.

## Exemple 6

Homopolymérisation anionique de la résine d'hydrocarbures aromatiques contenant des groupes propénoyle

Dans un réacteur réfrigéré contenant 50 ml de tétrahydrofuranne anhydre on introduit 19,2 mg de butyl-lithium. On ajoute à la solution obtenue, à la température de − 70 °C, une solution anhydre de 5 g de résine obtenue à l'exemple 1 dans 50 ml de tétrahydrofuranne. Le bain réfrigérant est retiré et la température du milieu réactionnel revient progressivement à la valeur ambiante où on le maintient pendant 20 heures. Le milieu réactionnel est précipité dans du méthanol et le précipité obtenu est filtré et séché. Le polymère obtenu a une masse moléculaire en poids allant de $10^5$ à $2 \cdot 10^7$ (on observe deux maxima dans la fonction de distribution des masses moléculaires, à $1,7 \cdot 10^5$ et $1,3 \cdot 10^7$) et ne présente pas de particules gélifiées.

## Exemple 7

Copolymérisation anionique de la résine d'hydrocarbures aromatiques contenant des groupes propénoyle avec un polyméthacrylate de méthyle vivant.

Le polyméthacrylate de méthyle vivant est préalablement préparé de la façon suivante. Dans un réacteur contenant 146,4 mg de diphénylhexyllithium en solution dans 50 ml de tétrahydrofuranne anhydre on introduit, à − 70 °C, 8,3 g de méthacrylate de méthyle anhydre. La réaction dure deux heures.

On introduit alors dans le milieu réactionnel une solution de 5 g de résine d'hydrocarbures insaturés obtenue à l'exemple 1, à − 70 °C. Le bain réfrigérant est retiré et la température revient progressivement à l'ambiante que l'on maintient 2 heures. Le milieu réactionnel est alors précipité dans du méthanol et le précipité obtenu est filtré et séché. Le copolymère a une masse moléculaire en poids allant de $10^4$ à $1,7 \cdot 10^7$, avec un maximum à $1,7 \cdot 10^5$, et ne présente pas de particules gélifiées.

Tableau I

| Exemple | Chlorure d'acide g | AlCl₃ g | Résine obtenue | |
|---|---|---|---|---|
| | | | Mn | Nombre de groupes propénoyle par noyau aromatique |
| 1 | 6,66 | 12 | 4980 | 0,058 |
| 2 | 6,66 | 12 | 4800 | 0,035 |
| 3 | 4,8 | 7,9 | 4100 | 0,025 |
| 4 | 6,42 | 10 | 2900 | 0,063 |
| 5 | 5 | 7,95 | 3150 | 0,042 |

**Revendications**

1. Résine d'hydrocarbures aromatiques, contenant notamment des motifs dérivés du styrène et/ou de ses homologues supérieurs, modifiée par des groupes propénoyles éventuellement substitués introduits par réaction d'acylation sur les noyaux aromatiques de ladite résine, lesdits groupes propénoyles ayant pour formule générale RR'C=CR''—CO— dans laquelle les radicaux R, R' et R'', identiques ou différents, sont choisis parmi l'hydrogène, les groupes méthyle, éthyle, n-propyle, isopropyle et les atomes d'halogène, caractérisé en ce qu'elle contient de 10 à 90 % en moles de motifs dérivés de l'indène et/ou de ses homologues supérieurs, en ce qu'elle contient de 0,02 à 0,07 groupe propénoyle éventuellement substitué et introduit par réaction d'acylation sur le noyau aromatique et en ce que la masse moléculaire moyenne de la résine d'hydrocarbures aromatiques à acyler est comprise entre 500 et 2 500.

2. Résine selon la revendication 1, caractérisée en ce qu'elle contient de 30 à 60 % en moles de motifs dérivés de l'indène et/ou de ses homologues supérieurs.

3. Polymère d'une résine d'hydrocarbures aromatiques selon l'une des revendications 1 et 2, caractérisé en ce qu'il est obtenu par voie anionique et en ce que sa masse moléculaire en poids s'étend de $10^4$ à $2 \cdot 10^7$.

4. Polymère selon la revendication 3, caractérisé en ce qu'il est obtenu par copolymérisation par voie anionique d'un polymère vivant avec une résine d'hydrocarbures aromatiques selon l'une des revendications 1 et 2.

5. Polymère selon la revendication 4, caractérisé en ce que le polymère vivant est le polyméthacrylate de méthyle.

**Claims**

1. An aromatic hydrocarbon resin, containing in particular units derived from styrene and/or its higher homologues, modified by possibly substituted propenoyl groups introduced by acylation reaction on the aromatic nuclei of the said resin, the said propenoyl groups having the general formula RR'C=CR''—CO in which the radicals R, R' and R'' are the same or different, and are selected from hydrogen, the methyl, ethyl, n-propyl and isopropyl groups and halogen atoms, characterized in that it contains from 10 to 90 mol% of units derived from indene and/or its higher homologues, it contains from 0.02 to 0.07 propenoyl group possibly substituted and introduced by acylation reaction on the aromatic nucleus, and the average molecular weight of the aromatic hydrocarbon resin to be acylated is between 500 and 2,500.

2. A resin according to Claim 1, characterized in that it contains from 30 to 60 mol% of units derived from indene and/or its higher homologues.

3. A polymer of an aromatic hydrocarbon resin according to any one of Claims 1 and 2, characterized in that it is obtained in an anionic manner and its molecular weight ranges from between $10^4$ and $2 \cdot 10^7$.

4. A polymer according to Claim 3, characterized in that it is obtained by copolymerization in an anionic manner from a living polymer with an aromatic hydrocarbon resin according to one of Claims 1 and 2.

5. A polymer according to Claim 4, characterized in that the living polymer is polymethylmethacrylate.

**Ansprüche**

1. Aromatisches Kohlenwasserstoffharz, das insbesondere von Styrol und/oder dessen höheren Homologen abgeleitete Grundeinheiten enthält und durch gegebenenfalls substituierte Propenoylgruppen modifiziert ist, die durch Acylierungsreaktion an die aromatischen Kerne des genannten Harzes gebunden sind, wobei die genannten Propenoylgruppen die allgemeine Formel RR'C=CR''—CO— besitzen, in der die Radikale R, R' und R'', identisch oder verschieden, ausgewählt sind aus der Gruppe bestehend aus Wasserstoff, den Methyl-, Äthyl-, n-Propyl- und Isopropylgruppen und den Halogenatomen, dadurch gekennzeichnet, daß es 10 bis 90 Mol.-% an von Inden und/oder dessen höheren Homologen abstammenden Grundeinheiten enthält, daß es 0,02 bis 0,07 gegebenenfalls substituierte Propenoylgruppen enthält, die durch Acylierungsreaktion an den aromatischen Kern gebunden sind, und daß die mittlere Molekularmasse des zu acylierenden aromatischen Kohlenwasserstoffharzes zwischen 500 und 2 500 beträgt.

2. Harz nach Anspruch 1, dadurch gekennzeichnet, daß es 30 bis 60 Mol.-% an von Inden und/oder dessen höheren Homologen abstammenden Grundeinheiten enthält.

3. Polymer eines aromatischen Kohlenwasserstoffharzes nach Anspruch 1 oder 2, dadurch gekennzeichnet, daß es auf anionischem Weg erhalten wird und daß seine durch das Gewichtsmittel bestimmte Molekularmasse $10^4$ bis $2 \cdot 10^7$ beträgt.

4. Polymer nach Anspruch 3, dadurch gekennzeichnet, daß es durch anionische Copolymerisation eines lebenden Polymers mit einem aromatischen Kohlenwasserstoffharz nach Anspruch 1 oder 2 erhalten wird.

5. Polymer nach Anspruch 4, dadurch gekennzeichnet, daß das lebende Polymer Methylpolymethacrylat ist.